# EUROPÄISCHE PATENTSCHRIFT

(11) **EP 0 958 647 B1**
(45) Veröffentlichungstag und Bekanntmachung des Hinweises auf die Patenterteilung: **18.07.2001**
(21) Anmeldenummer: 98909431.3
(22) Anmeldetag: 10.02.1998
(51) Int. Cl.: H02M 1/12, H02M 7/217

(54) **VORRICHTUNG ZUR UMFORMUNG EINES DREIPHASIGEN SPANNUNGSSYSTEMS**
DEVICE FOR TRANSFORMING A THREE-PHASE VOLTAGE SYSTEM
DISPOSITIF POUR TRANSFORMER UN SYSTEME DE TENSION TRIPHASEE

(30) Priorität: 10.02.1997 AT 20797
(43) Veröffentlichungstag der Anmeldung: 24.11.1999
(73) Patentinhaber: Ascom Energy Systems AG, 3000 Bern 14 (CH)
(72) Erfinder: KOLAR, Johann, W., A-1050 Wien (AT)
(74) Vertreter: Roshardt, Werner Alfred, Dipl.-Phys.
(86) Internationale Anmeldenummer: EP9800727
(87) Internationale Veröffentlichungsnummer: WO9835429

(56) Entgegenhaltungen:
- GB-A- 2 294 165
- KUNIOMI OGUCHI ET AL: "A MULTILEVEL-VOLTAGE SOURCE RECTIFIER WITH A THREE-PHASE DIODE BRIDGE CIRCUIT AS A MAIN POWER CIRCUIT" PROCEEDINGS OF THE INDUSTRY APPLICATIONS SOCIETY ANNUAL MEETING, HOUSTON, OCT. 4 - 9, 1992, Bd. VOL. 1, Nr. -, 4.Oktober 1992, INSTITUTE OF ELECTRICAL AND ELECTRONICS ENGINEERS, Seiten 695-702, XP000368864
- CONTRERAS J G ET AL: "A THREE-PHASE HIGH POWER FACTOR PWM ZVS POWER SUPPLY WITH A SINGLE POWER STAGE" PROCEEDINGS OF THE ANNUAL POWER ELECTRONICS SPECIALISTS CONFERENCE, TAIPEI, TAIWAN, JUNE 20 - 24, 1994, Bd. VOL. 1, Nr. CONF. 25, 20.Juni 1994, SOCIETY, Seiten 356-362, XP000492038

## Beschreibung

Die Erfindung betrifft eine Vorrichtung zur Umformung eines dreiphasigen Spannungssystems in eine potentialgetrennte Gleichspannung wie sie im Oberbegriff des Patentanspruches 1 beschrieben ist.

Nach dem derzeitigen Stand der Technik wird zur Realisierung eines dreiphasigen Pulsgleichrichtersystems bei Forderung nach näherungsweise sinusförmigem Verlauf des dem Dreiphasennetz entnommenen Stromes, ohmschem Grundschwingungsnetzverhalten und Potentialtrennung und Regelbarkeit der Ausgangsgteichspannung vorzugsweise eine aus der EP 660 498 bekannte Stromrichterschaltung und Regeleinrichtung mit nachgeschalteter Gleichspannungswandlerstufe eingesetzt.

Die so gebildeten Spannungszwischenkeis-Stromrichtersysteme weisen allerdings eine relativ komplexe Struktur des Leistungsteiles und einen relativ geringen Wirkungsgrad auf, da die Energieumformung zweistufig erfolgt und damit der Gesamtwirkungsgrad durch das Produkt der Teilwirkungsgrade bestimmt wird.

Weiters wird durch die zur Pufferung der Zwischenkreisspannung vorzusehenden Kondensatoren die Baugröße des Systems erhöht bzw. dessen Leistungsdichte verringert.

Aufgabe der Erfindung ist es daher, ein dreiphasiges Pulsgleichrichtersystem zu schaffen, das eine direkte (einstufige) Umformung der dreiphasigen Netzspannung in eine potentialgetrennte Gleichspannung erlaubt, wobei als weitere Grundforderungen ein sinusförmiger Verlauf des Netzstromes und die Regelbarkeit der Ausgangsspannung zu erfüllen sind.

Dies wird erfindungsgemäß durch die kennzeichnenden Merkmale des Patentanspruches 1 erreicht. Weitere vorteilhafte Ausgestaltungen der Erfindung sind den Unteransprüchen zu entnehmen.

Das Gleichrichtersystem kann durch die erfindungsgemäße Kombination von Funktions- bzw. Bauelementegruppen der bekannten Grundstrukturen unidirektionaler Dreiphasen-Dreipunkt-Pulsgleichrichtersysteme mit erfindungsgemäß en Teilsystemen gebildet gedacht werden, deren Steuerung von den Ansteuerbefehlen der Schaltelemente der ursprünglichen Stromrichtereinheit abgeleitet werden kann. Die Regelung der Ausgangsspannung und des Netzstromes der letztendlich resultierenden Schaltung kann vorteilhaft gleich wie die der ursprünglichen Vorrichtung erfolgen.

Der Leistungsteil eines konventionellen dreiphasigen Dreipunkt-Pulsgleichrichtersystems wird im einfachsten Fall durch netzseitige Vorschaltinduktivitäten, eine, in jeder Phase zwischen Vorschaltinduktivität und Mittelpunkt der Ausgangsspannung liegende (bidirektionale, bipolare) elektronische Schaltvorrichtung und durch, von den positiven Klemmen dieser Schaltvorrichtungen gegen die positive Ausgangsspannungsschiene geschaltete, und von der negativen Ausgangsspannungsschiene gegen die negativen Klemmen der Phasen-Schaltvorrichtungen geschaltete Gleichrichterdioden gebildet, wobei die Ausgangsteilspannungen durch Kondensatoren gestützt werden. Grundgedanke der Erfindung ist nun, die Ausgangskondensatoren durch eine elektronische Schaltvorrichtung und die Primärwicklung eines Übertragers dessen Sekundärspannung über eine Diodenbrücke gleichgerichtet und kapazitiv geglättet wird zu ersetzen und die Schaltvorrichtung derart zu steuern, daß die an der Primärwicklung auftretende Spannung die ursprünglich durch die Kondensatoren definierte Spannung simuliert. Die Primärwicklung des Übertragers wird dafür einseitig mit der gemeinsamen Verbindung der elektronischen Phasenschaltvorrichtungen der ursprünglichen Schaltung verbunden und mit der zweiten Klemme an den Ausgang eines zwischen positiver und negativer (Zwischenkreis)spannungsschiene liegenden, durch Serienschaltung eines positiven Transistors mit antiparallelen Dioden und eines negativen Transistors mit antiparalleler Diode gebildeten Halbbrückenzweiges gelegt.

Für die weiteren Überlegungen sei ein Phasenstrom als physikalisch positiv, d.h. in eine Eingangsklemme des Systems fließend und die Ströme der übrigen Phasen als physikalisch negativ vorausgesetzt (also die Verhältnisse innerhalb eines 60° elektrisch breiten Ausschnittes der Netzperiode betrachtet) womit aufgrund der Symmetrien eines Dreiphasennetzes die Verhältnisse innerhalb der gesamten Netzperiode erfaßt werden, wobei die Ströme durch die Vorschaltinduktivitäten (in Verbindung mit einer entsprechenden Stromregelung) eingeprägt werden; weiters sei eine Ausgangs- bzw. Sekundärspannung des Systems derart angenommen, daß bei Stromfluß über die Primärwicklung eine über dem Spitzenwert der verketteten Netzspannung liegende Spannung eingekoppelt wird.

Werden nun die Phasenschaltvorrichtungen als durchgeschaltet angenommen und wird durch ein, von einer, z.B. als Zweipunkt-Netzstromregelung ausgeführten Steuervorrichtung des Systems abgegebenes Steuersignal die Phasenschaltvorrichtung der positiven Eingangsstrom führenden Phase geöffnet, wird der positive Transistor des Halbbrückenzweiges zeitlich überlappend durchgeschaltet und damit der Phasenstrom über die Primärwicklung des Übertragers geführt, womit die zufolge des aufgrund des Durchflutungsausgleichs auftretenden sekundärseitigen Stromflusses in die Ausgangskapazität an der Sekundärseite des Übertragers liegende Spannung primärseitig eingekoppelt wird. Da diese Spannung voraussetzungsgemäß über dem Spitzenwert der verketteten Netzspannung liegt, wird der positive Phasenstrom (bei gleichzeitiger Lieferung von Energie an den Ausgangskreis) verringert, und damit das durch den Stromregler angestrebte Ziel erreicht. In völlig analoger Weise wird bei Abschalten der Schaltvorrichtung einer negativen Strom führenden Phase der negative Transistor des Halbbrückenzweiges überlappend durchgeschaltet und damit der Betrag des zugeordneten Phasenstromes verringert bzw. Energie an den Ausgangskreis geliefert. (Wird eine positiven und eine negativen Strom führende Phasenschaltvorrichtung abgeschaltet, werden der positive und negative Transistor des Brückenzweiges durchgeschaltet.) Bei Wiedereinschalten einer Phasenschaltvorrichtung wird bei positivem Vorzeichen des zugeordneten Phasenstromes der positive Transistor und bei negativem Vorzeichen der negative Transistor des Brückenzweiges verzögert abgeschaltet, womit ein Wiederansteigen des Betrages des entsprechenden Phasenstromes ermöglicht wird.

Neben der Regelung des Netzstromes ist für optimale Nutzung des Magnetkreises des Übertragers auch eine symmetrische Magnetisierung bzw. Gleichanteilfreiheit des in die Primärwicklung des Übertragers eingeprägten Stromes sicherzustellen. Dies entspricht völlig der Forderung nach verschwindendem Mittelwert des in den kapazitiv gebildeten Mittelpunkt der Ausgangsspannung des ursprünglichen Gleichrichtersystems fließenden Stromes und kann mit derselben, dem Stand der Technik entsprechenden und daher hier nicht näher diskutierten Regelstrategie über hinsichtlich Spannungsbildung redundante Schaltzustände des Konverters erreicht werden.

Auch hinsichtlich der Regelung der Ausgangsspannung bzw. der dieser unterlagerten Regelung des Netzphasenströme weist das erfindungsgemäße Gleichrichtersystem keine Besonderheiten auf. Es kann z.B. die für Dreiphasen-Dreipunkt-Pulsgleichrichter bekannte Zweipunktregelung der Phasenströme in identer Form Anwendung finden, wobei im vorliegenden Fall lediglich darauf zu achten ist, daß sich stets nur zwei der drei Phasenschaltvorrichtungen im Ausschaltzustand befinden, so daß den Phasenstromreglem stets eine für die Erfüllung der Regelaufgabe benötigte Spannung zur Verfügung steht (siehe Patentanspruch 3). Auf eine nähere Beschreibung der Regelschaltung soll daher verzichtet werden.

Anzumerken ist, daß die vorstehend beschriebene Schaltungsfunktion nicht an eine konkrete Ausführung des Sekundärteiles des erfindungsgemäßen Systems gebunden ist. Die Sekundärwicklung kann dem Stand der Technik entsprechend und daher hier nicht näher beschrieben sowohl über eine Dioden-Vollbrückenschaltung mit der Ausgangs-Glättungskapazität verbunden werden, oder als Mittelpunktsschaltung, also mit zwei getrennten Wicklungsteilen und nur zwei Ausgangsdioden realisiert werden (siehe Patentanspruch 2), wobei die Mittelpunktsschaltung bei hohen Strömen geringere Leitverluste aufweist, jedoch durch höheren Realisierungsaufwand und geringere Ausnutzung des Übertragers gekennzeichnet ist.

Nachfolgend wird anhand einer Zeichnung die Erfindung noch näher erläutert. Es zeigt:
- Fig.1: Die Grundstruktur (vereinfachte, schematische Darstellung) des Leistungsteiles eines, bei erfindungsgemäßer Verschaltung von Teilsystemen bzw. Bauelementegruppen erfindungsgemäßer Struktur mit Funktionsgruppen eines bekannten unidirektionalen Dreiphasen-Dreipunkt-Pulsgleichrichtersystems resultierenden Gleichrichtersystems mit potentialgetrennter Ausgangsspannung.
- Fig.2: Eine-Ausführungsvariante des Sekundärkreises der erfindungsgemäßen Vorrichtung.

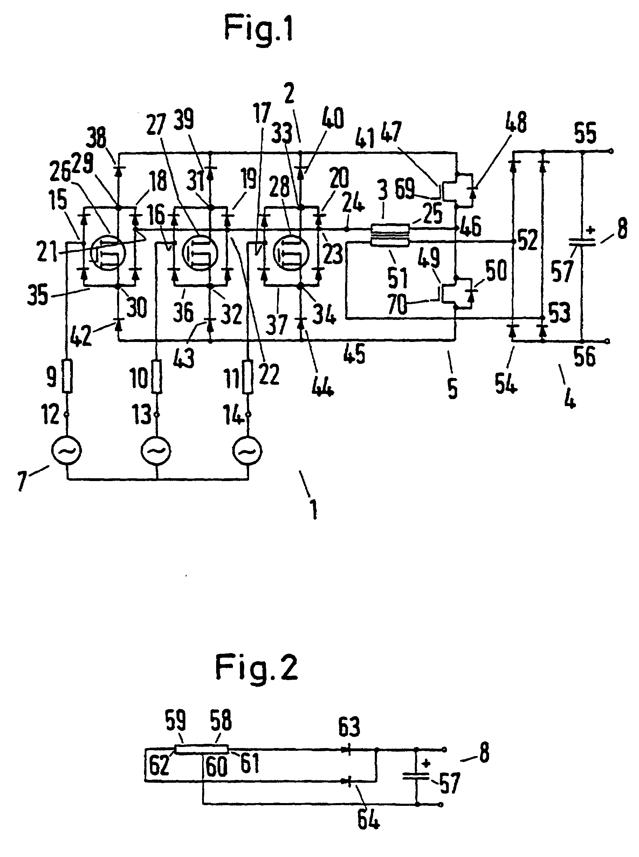

In Fig. 1 ist ein Drehstrom-Pulsgleichrichtersystem 1 dargestellt, das einen Primärkreis 2 und einen über einen Übertrager 3 potentialgetrennten Sekundärkreis 4 aufweist und durch erfindungsgemäße Kombination eines Teilsystems 5 erfindungsgemäßer Struktur mit dem Eingangsteil 6 eines dem Stand der Technik entsprechenden Dreiphasen-Dreipunkt-Pulsgleichrichtersystems gebildet wird. Die Grundfunktion des Gleichrichtersystems 1 besteht in der unidirektionalen Umformung eines dreiphasigen Eingangs-Spannungssystems 7 in eine potentialgetrennte Ausgangsgleichspannung 8 wobei in bekannter Weise Vorschaltinduktivitäten 9,10,11 von den Eingangsspannungsklemmen 12,13,14 an die Eingänge 15,16,17 bidirektionaler, bipolarer elektronischer Schaltvorrichtungen 18,19,20 geschaltet werden, deren jeweils zweiten Eingangsklemmen 21,22,23 mit einer Klemme 24 der Primärwicklung 25 des Übertragers 3 verbunden sind. Die elektronische Schaltvorrichtung jeder Phase wird beispielsweise durch Anordnung eines unidirektionalen, unipolaren Schalters 26 bzw. 27 bzw. 28 über den gleichspannungsseitigen Klemmen 29,30 bzw. 31,32 bzw. 33,34 einphasiger Diodenbrückenschaltungen 35 bzw. 36 bzw. 37 gebildet. Die wechselspannungsseitigen Klemmen dieser Diodenbrücken entsprechen den vorstehend genannten Eingängen der elektronischen Schaltvorrichtungen 18,19,20. Weiters sind im einfachsten Fall die positiven Klemmen 29,31,32 der Diodenbrücken 35,36,37 über Dioden 38,39,40 mit einer positiven Primärspannungsschiene 41 und die negativen Klemmen 30,32,34 über Dioden 42,43,44 mit einer negativen Primärspannungsschiene 45 verbunden.

Das erfindungsgemäße Teilsystem 5 wird primärseitig durch einen kollektor- oder drainseitig mit der positiven Primärspannungsschiene 41 und emitter- oder sourceseitig mit der zweiten Klemme 46 der Primärwicklung 25 verbundenen Leistungstransistor (bzw. allgemein elektronischen Schalter) 47 und eine diesem antiparallel geschaltet Diode 48 sowie durch einen emitter- oder sourceseitig mit der negativen Primärspannungsschiene 45 und kollektor- oder drainseitig der Klemme 46 der Primärwicklung 25 verbundenen Leistungstransistor (bzw. allgemein elektronischen Schalter) 49 und eine diesem antiparallel geschaltete Diode 50 gebildet. Die Sekundärwicklung 51 des Übertragers 3 wird beispielsweise an die Eingangsklemmen 52 und 53 einer Einphasen-Diodenbrücke 54 mit zwischen den Ausgangsklemmen 55 und 56 angeordneter, die Ausgangsspannung 8 glättender Kapazität 57 gelegt also in Vollbrückenschaltung ausgeführt.

Eine vorteilhafte Ausführungsvariante des Sekundärkreises der erfindungsgemäßen Vorrichtung ist in Fig. 2 gezeigt. Hierbei wird die Sekundärwicklung 51 des Übertragers 3 durch zwei einseitig verbundene Wicklungsteile 58 und 59 realisiert, wobei die Verbindungsklemme 60 der Teilwicklungen einen Pol der Ausgangsspannung 8 bildet. Von den jeweils anderen Wicklungsenden 61 und 62 werden Dioden 63 und 64 kathoden- oder anodenseitig gegen einen weiteren, den zweiten Pol der Ausgangsspannung bildenden Schaltungspunkt 65 geschaltet und zwischen 65 und 60 wieder eine Glättungskapazität 57 angeordnet bzw. eine, geringere Leitverluste als eine Vollbrückenschaltung aufweisende Mittelpunktsschaltung realisiert.

Der Schaltzustand der Vorrichtung wird durch die, von einer Ausgangsspannungsregel- bzw. dieser unterlagerten Eingangsstromregeleinrichtung (z.B. ausgeführt als Zweipunkt- oder Toleranzbandregelung) an die Steuereingänge 66,67,68 der elektronischen Schaltvorrichtungen 18,19,20 der Phasen gelegten Signale definiert. Die Steuerung des erfindungsgemäßen Schattungsteiles 5 erfolgt über, von den Steuerbefehlen 66,67,68 abgeleitete, an die Basis- bzw. Gateanschlüße 69 und 70 der Leistungstransistoren 47 und 49 gelegte Steuersignale.

Für die weitere Erklärung der Schaltungsfunktion wird ein physikalisch in die Eingangsklemme 12 der Schaltvorrichtung fließender und damit positiver Netzsphasenstrom und für die beiden anderen Phasen ein physikalisch negativer Wert des Netzstromes vorausgesetzt womit die Verhältnisse innerhalb einer gesamten Netzperiode erfaßt werden, da bei sinusförmigem Verlauf der Netzströme (mit Ausnahme der Nulldurchgänge) stets zwei Phasenströme gleiches und der dritte Phasenstrom entgegengesetztes Vorzeichen aufweisen.

Sind nun z.B. die Phasenschaltvorrichtungen 18,19,20 sämtlich durchgeschaltet, und verlaßt der über die Eingangsklemme 12 fließende, ansteigende Netzphasenstrom das Toleranzband, wird durch einen vom Ausgang der, der Phase zugeordneten (vorteilhaft einen sinusförmigen Verlauf des Netzstromes in Phase mit der zugeordneten Phasenspannung sicherstellenden) Stromregeleinrichtung abgeleiteten Steuerbefehl 69 der Leistungstransistor 47 durchgeschaltet und mit geringer zeitlicher Verzögerung die Schaltvorrichtung 18 geöffnet womit der Phasenstrom in die Freilaufdiode 38 kommutiert und sich über die Primärwicklung 25 des Übertragers 3 und die Phasenschaltvorrichtungen 19 und 20 schließt. Der Stromfluß in der Primärwicklung 25 führt zum Auftreten eines entsprechenden, durchflutungsausgleichenden Stromflusses in der Sekundärwicklung 51 des Übertragers 3, der über die Diodenbrücke 54 in die Ausgangsspannung 8 bzw. den Ausgangskondensator 57 gespeist wird, womit Leistung an den Ausgangskreis geliefert wird und an der Sekundärwicklung eine physikalisch von 52 nach 53 gerichtete, in eine von 46 nach 24 gerichtete Primärspannung übersetzte Spannung auftritt. Wird diese transformatorisch eingekoppelte Primärspannung durch entsprechendes Übersetzungsverhältnis des Übertrager höher als die verkettete Netzspannung gewählt wird somit eine Verringerung des über die Klemme 12 zufließenden Phasenstromes erreicht, womit letztlich das Toleranzband nach unten verlassen und die Schaltvorrichtung 18 wieder durchgeschaltet wird, was im Sinne der Stromregelung zu einem erneuten Ansteigen des Phasenstromes führt. In Verallgemeinerung der vorgehend beschriebenen Vorgangsweise wird also vor Abschalten der Schaltvorrichtung einer positiven Strom führenden Phase stets der Leistungstransistor 47 durchgeschaltet und unmittelbar nach Wiedereinschalten der Schaltvorrichtung wieder gesperrt bzw. vor Abschalten einer negativen Strom führenden Phase der Leistungstransistor 49 durchgeschaltet und nach Wiedereinschalten dieser Phase wieder gesperrt, wobei grundsätzlich ein simultanes Leiten von Leistungstransistor 47 und 49 zulässig ist. Allerdings ist z.B. durch eine Verriegelungslogik sicherzustellen, daß sich stets nicht mehr als zwei Phasenschaltvorrichtungen im ausgeschalteten Zustand befinden, da bei Abschalten sämtlicher Schaltvorrichtungen die Klemmen 15,16,17 über die Dioden 38,39,40, die Transistoren 47 und 48 und die Dioden 42,43,44 kurzgeschlossen werden bzw. keiner der Phasenströme über die Primärwicklung 25 geführt und somit keine Gegenspannung in einen Phasenstrompfad eingekoppelt wird womit ein Anstieg der Phasenströme und nicht eine Verringerung der Beträge der Phasenströme resultieren würde.

Allgemein wird also zur Regelung des Netzstromes indirekt die Ausgangsspannung herangezogen, wobei stets entsprechend dem Windungszahlverhältnis des Übertragers transformierte Ausschnitte der Netzphasenströme in den Ausgangskreis gespeist werden, womit auch ohne genaueres Studium der Funktion der erfindungsgemäßen Vorrichtung die Möglichkeit einer Regelung der Ausgangsspannung über die Amplitude der Netzströme deutlich wird. Wird die Ausgangsspannung durch elektrochemische Speicher eingeprägt, wird durch die Vorgabe der Netzstromamplitude der mittlere Ladestrom bestimmt.

Neben der Regelung des Netzstromes und der Ausgangsspannung ist für das erfindungsgemäße System auch eine möglichst symmetrische Aussteuerung des Magnetkernes sicherzustellen. Da ein positiver oder negativer Stromfluß über die Primärwicklung stets mit dem Auftreten einer positiven oder negativen Primärspannung verbunden ist kann dies im einfachsten Fall über einen gleichanteilfreien Verlauf des Primärstromes erreicht werden, womit eine Analogie zur Stabilisierung des Potentials des kapazitiv gebildeten Mittelpunktes eines konventionellen DreipunktPulsgleichrichtersystems gegeben ist. Beispielsweise kann also der Sekundärstromoder die Sekundärspannung des Übertragers erfaßt und das Auftreten eines transienten Gleichanteiles dadurch korrigiert werden, daß zur Regelung des Netzstromes bevorzugt (z.B. durch Addition eines Offsets entsprechenden Vorzeichens zu den Phasenstromsollwerten) die den Magnetisierungszustand des Übertragers symmetrierenden, hinsichtlich primärseitiger Spannungsbildung redundante Schaltzustände des Gleichrichtersystems herangezogen werden. Da dieses Verfahren mit Ausnahme der Erfassung des Magnetisierungszustandes des Übertragers dem Stand der Technik entspricht, soll eine nähere Beschreibung im Rahmen der vorliegenden Anmeldung unterbleiben.

## Patentansprüche

1. Vorrichtung zur Umformung eines dreiphasigen Spannungssystems (7) in eine frei vorgebbare potentialgetrennte Gleichspannung (8) die einen Primärkreis (2) und einen Sekundärkreis (4) und in jeder Phase des Primärkreises eine, an einen Eingang (15,16,17) einer zugeordneten bidirektionalen, bipolaren elektronischen Schaltvorrichtung (18,19,20) geschaltete Vorschaltinduktivität (9,10,11) aufweist, wobei die jeweils zweiten Eingänge (21,22,23) der Schaltvorrichtungen direkt verbunden sind und eine positive Primärspannungsschiene (41) über Dioden (38,39,40) und eine negative Primärspannungsschiene (45) über Dioden (42,43,44) gespeist wird, dadurch gekennzeichnet, daß ein Wicklungsende (24) der Primärwicklung (25) eines Übertragers (3) mit der, die Eingänge (21,22,23) der Schaltvorrichtungen (18,19,20) verbindenden Leitung und ein kollektor- oder drainseitig an der positiven Primärspannungsschiene (41) liegender Leistungstransistor (47) mit antiparalleler Diode (48) mit der zweiten Klemme (46) der Primärwicklung (25) verschaltet wird und von Wicklungsende (46) abzweigend ein weiterer, emitter- oder sourceseitig mit der negativen Primärspannungsschiene (45) verbundener Leistungstransistor mit antiparalleler Diode (50) angeordnet wird und die Sekundärwicklung (51) des Übertragers (3) in an sich bekannter Weise an die Eingangsklemmen (52) und (53) einer Einphasen-Diodenbrücke (54) mit zwischen den Ausgangsklemmen (55) und (56) angeordneter, die Ausgangsspannung (8) glättender Kapazität (57) gelegt, also in Vollbrückenschaltung ausgeführt wird.

2. Vorrichtung nach Anspruch 1, dadurch gekennzeichnet}, daß der Sekundärkreis (4) der Vorrichtung (1) als Mittelpunktsschaltung ausgeführt wird.

3. Verfahren zur Steuerung der Vorrichtungen nach Anspruch 1 oder 2 bezugnehmend auf die von einer, der Regelung der Ausgangsspannung (8) unterlagerten Toleranzbandregelung der Netzphasenströme gebildeten Steuersignale, dadurch gekennzeichnet, daß vor dem durch die Stromregelung ausgelösten Abschalten einer positiven Phasenstrom führenden Schaltvorrichtung (18) oder (19) oder (20) der Leistungstransistor (47) durchgeschaltet und erst nach Wiedereinschalten der jeweiligen Schaltvorrichtung wieder abgeschaltet wird und vor Abschalten einer negativen Phasenstrom führenden Schaltvorrichtung (18) oder (19) oder (20) der Leistungstransistor (48) durchgeschaltet und erst nach Wiedereinschalten der jeweiligen Schaltvorrichtung wieder abgeschaltet wird, womit ein kontinuierlicher Verlauf der durch die Eingangsinduktivitäten (9,10,11) eingeprägten Phasenströme sichergestellt und durch die Führung jedenfalls eines Phasenstromes über die Primärwicklung (25) des Übertragers (3) bzw. den dadurch bedingten sekundärseitigen Stromfluß zwischen den Klemmen (24) und (46) die für die Regelung der Netzphasenströme erforderliche, der Netzspannung entgegenwirkende Spannung auftritt, wobei stets jedoch mindestens eine der Phasenschaltvorrichtungen (18) oder (19) oder (20) im durchgeschalteten Zustand verbleibt und die Regelung der Ausgangsspannung in an sich bekannter Weise über die Amplitude der Netzphasenströme erfolgt.

## Claims

1. Apparatus for transforming a three-phase voltage system (7) into a freely preselectable potentially-separated direct current voltage (8) which has a primary circuit (2) and a secondary circuit (4) and, in each phase of the primary circuit, a series inductor (9, 10, 11), which is connected to an input (15, 16, 17) of an associated bidirectional, bipolar electronic operating device (18, 19, 20), wherein the second inputs (21, 22, 23) of the operating devices are connected directly and a positive primary voltage rail (41) is supplied via diodes (38, 39, 40) and a negative primary voltage rail (45) via diodes (42, 43, 44), characterised in that a winding end (24) of the primary winding (25) of a transformer (3) is connected to the line, which connects the inputs (21, 22, 23) of the operating devices (18, 19, 20), and in that a power transistor (47), which is arranged at the collector side or at the drain side on the positive primary voltage rail (41) and which has an anti-parallel diode (48), is connected to the second terminal (46) of the primary winding (25) and, branching off from the winding end (46), another power transistor, which is connected to the negative primary voltage rail (45) at the emitter side or at the source side, is arranged and has an anti-parallel diode (50), and the secondary winding (51) of the transformer (3) is, in known manner, positioned at the input terminals (52) and (53) of a single-phase diode bridge (54) with a capacitor (57) which is arranged between the output terminals (55) and (56) and which smoothes the output voltage (8), that is to say, is of fully bridge-connected form.

2. Apparatus according to claim 1, characterised in that the secondary circuit (4) of the apparatus (1) is in the form of a star connection.

3. Method for controlling the apparatuses according to claim 1 or claim 2, relating to the control signals which are formed by a tolerance band regulation, which is secondary to the regulation of the output voltage (8), of the network phase currents, characterised in that, before the deactivation, triggered by the current regulation, of an operating device (18) or (19) or (20), which carries positive phase current, the power transistor (47) is switched-on and is not switched off again until after the relevant operating device has been switched back on and, before an operating device (18) or (19) or (20), which carries negative phase current, is switched off, the power transistor (48) is switched-on and is not switched off again until after the relevant operating device has been switched back on, as a result of which a continuous variation of the phase currents impressed by the input inductors (9, 10, 11) is ensured and the voltage which is necessary for the regulation of the network phase currents and which acts counter to the line voltage is produced owing to the routing of one phase current in each case via the primary winding (25) of the transformer (3) or the flow of current, located on the secondary side and caused thereby, between the terminals (24) and (46), wherein at least one of the phase operating devices (18) or (19) or (20) always remains in the switched-on state, however, and the regulation of the output voltage is effected in known manner by means of the amplitude of the network phase currents.

## Revendications

1. Dispositif pour transformer un système de tension triphasé (7) en une tension continue pouvant être prédéterminée librement (8), séparée du point de vue potentiel, qui possède un circuit primaire (2) et un circuit secondaire (4) et, dans chaque phase du circuit primaire, une inductance série additionnelle (9,10,11), qui est connectée à une entrée (15,16,17) d'un dispositif de commutation électronique bipolaire bidirectionnel associé (18,19,20), et dans lequel les secondes entrées respectives (21,22,23) du dispositif de commutation sont reliées directement et un rail de tension primaire positif (41) est alimenté au moyen de diodes (38,39,40) et un rail de tension primaire négative (41) est alimenté au moyen de diodes (42,43,44), caractérisé en ce qu'une extrémité (24) de l'enroulement primaire (25) d'un transformateur (3) est connectée à la ligne qui relie les entrées (21,22,23) des dispositifs de commutation (18,19,20), et qu'un amplificateur de puissance (47) raccordé côté collecteur ou côté drain au rail de tension primaire positif (41) et comportant une diode (48) montée selon un montage antiparallèle est connecté à la seconde borne (46) de l'enroulement primaire (25), et un autre transistor de puissance, relié côté émetteur ou côté source au rail de tension primaire négatif (45) et comportant une diode (50) montée selon un montage antiparallèle, est monté en dérivation à partir de l'extrémité (46) de l'enroulement, et l'enroulement secondaire (51) du transformateur (3) est connecté de façon connue en soi aux bornes d'entrée (52) et (53) d'un pont monophasé de diodes (54) comportant une capacité (57) qui est située entre les bornes de sortie (55) et (56) et réalise un lissage de la tension de sortie (8), c'est-à-dire est réalisée selon un circuit en pont double intégral.

2. Dispositif selon la revendication 1, caractérisé en ce que le circuit secondaire (4) du dispositif (1) est agencé sous la forme d'un circuit à point médian.

3. Procédé pour commander le dispositif selon la revendication 1 ou 2, en référence aux signaux de commande formés par une régulation de la plage de tolérance des courants des phases du réseau, qui est subordonné à la régulation de la tension de sortie (8), caractérisé en ce que le transistor de puissance (47) est placé à l'état conducteur avant le débranchement, déclenché par la régulation du courant, d'un dispositif de commutation (18) ou (19) pilotant un courant de phase positif et est à nouveau placé à l'état bloqué uniquement après la réactivation du dispositif de commutation respectif et le transistor de puissance (48) est placé à l'état conducteur avant le débranchement d'un dispositif de commutation (18) ou (19) ou (20) pilotant un courant de phase négatif et est à nouveau placé à l'état bloqué uniquement après la réactivation du dispositif de commutation respectif, ce qui garantit une allure continue des courants de phase injectés par les inductances d'entrée (9,10,11), et la tension nécessaire pour la régulation des courants des phases du réseau et opposée à la tension du réseau, apparaît sous l'effet du pilotage en tout cas d'un courant de phase par l'intermédiaire de l'enroulement primaire (25) du transformateur (3) ou du flux de courant côté secondaire, qui est conditionné de ce fait, entre les bornes (24) et (46), au moins l'un des dispositifs de commutation de phases (18) ou (19) ou (20) restant cependant toujours à l'état passant, et la régulation de la tension de sortie s'effectuant d'une manière connue en soi au moyen de l'amplitude des courants des phases du réseau.
